(19) **Europäisches Patentamt**

**European Patent Office**

**Office européen des brevets**

(11) **EP 0 941 461 B1**

(12) **EUROPÄISCHE PATENTSCHRIFT**

(45) Veröffentlichungstag und Bekanntmachung des Hinweises auf die Patenterteilung:
**23.04.2003  Patentblatt 2003/17**

(21) Anmeldenummer: **98958847.0**

(22) Anmeldetag: **29.09.1998**

(51) Int Cl.⁷: **G01M 1/36**

(86) Internationale Anmeldenummer:
**PCT/EP98/06194**

(87) Internationale Veröffentlichungsnummer:
**WO 99/017090 (08.04.1999 Gazette 1999/14)**

(54) **VERFAHREN ZUM AUSWUCHTEN EINES ROTATIONSKÖRPERS**

METHOD FOR BALANCING A ROTATING BODY

PROCEDE POUR EQUILIBRER UN CORPS DE REVOLUTION

(84) Benannte Vertragsstaaten:
**CH DE ES FR GB IT LI**

(30) Priorität: **30.09.1997  DE 19743578**

(43) Veröffentlichungstag der Anmeldung:
**15.09.1999  Patentblatt 1999/37**

(73) Patentinhaber: **Hofmann Mess- und Auswuchttechnik GmbH & Co. KG**
**64319 Pfungstadt (DE)**

(72) Erfinder: **DANZ, Günter**
**D-64846 Grosszimmern (DE)**

(74) Vertreter: **Kirschner, Klaus Dieter, Dipl.-Phys.**
**Schneiders & Behrendt**
**Rechtsanwälte - Patentanwälte**
**Sollner Strasse 38**
**81479 München (DE)**

(56) Entgegenhaltungen:
**WO-A-96/17294          FR-A- 2 597 203**
**US-A- 4 458 554**

• **G. OME: "QUICK AND EASY ROTOR BALANCING" MACHINE DESIGN., Bd. 50, Nr. 1, Januar 1978, Seiten 126-127, XP002090948 CLEVELAND US**

EP 0 941 461 B1

**Beschreibung**

Die Erfindung betrifft ein Verfahren zum Auswuchten eines Rotationskörpers mit einem Wuchtapparat, der eine Verstelleinheit zum Verstellen von Kompensationsmassen aufweist.

Automatische Wuchtapparate arbeiten bisher nach dem Verfahren, daß die Kompensationsmassen solange in eine bestimmte Richtung verstellt oder gespreizt werden, solange die Schwingungen an der Maschine kleiner werden. Werden beim Verstellen der Kompensationsmassen die Schwingungen größer, wird die Verstellrichtung bei der Verstellung der Kompensationsmassen umgekehrt. Es wird solange wiederholt nach diesem Verfahren verstellt, bis bei Erreichen einer vorgegebenen Restunwucht das Auswuchtverfahren beendet wird. Dabei ist nachteilig, daß bei dieser "Try and Error" Methode häufig lange Zeit für das Wuchten erforderlich ist.

Der Erfindung liegt die Aufgabe zugrunde, ein Verfahren zum Auswuchten eines Rotationskörpers bereitzustellen, bei dem eine gezielte Auswuchtung im Gegensatz zu dem "Try and Error" Prinzip bei bekannten automatischen Auswuchtsystemen durchgeführt wird.

Dazu ist das erfindungsgemäße Verfahren dadurch gekennzeichnet, daß

(a) die Kompensationsmassen in ihre Nullpositionen gebracht werden, in denen sich die von ihnen erzeugten Unwuchtvektoren gegenseitig aufheben, daß

(b) in an sich bekannter Weise der dann vorhandene Unwuchtvektor V1 nach Größe und Richtung gemessen wird, daß

(c) wenigstens eine der Kompensationsmassen um einen beliebigen Winkel $\alpha$ oder ihr Abstand von der Rotationsachse verstellt wird, , wobei eine zusätzliche Unwucht mit einem Kalibrierungs-Unwuchtvektor V2 erzeugt wird, daß

(d) der Winkel $\alpha$ oder die Verstellung des Abstandes erfaßt wird, daß

(e) in an sich bekannter Weise der dann vorhandene Gesamt-Unwuchtvektor V3 nach Größe und Richtung gemessen wird, daß

(f) aus dem Unwuchtvektor V1 und dem Gesamt-Unwuchtvektor V3 der Kalibrierungs-Unwuchtvektor V2 nach:

$$V2 = V3 - V1$$

berechnet wird, wobei das System aus Wuchtapparat und Rotationskörper kalibriert ist, und daß

(g) die Kompensationsmassen aus den Nullpositionen derart verfahren werden, daß der Unwuchtvektor V kompensiert wird. Die Eichung erfolgt daher im we sentlichen durch das Erzeugen eines Unwuchtvektors durch eine definierte Verstellung einer Kompensationsmasse um einen Winkel $\alpha$ oder um einen bestimmten Abstand von der Rotationsachse.

Eine vorteilhafte Ausgestaltung des erfindungsgemäßen Verfahren ist dadurch gekennzeichnet, daß im Schritt (a) bei einem Wuchtvorgang die Verstellung der Kompensationsmassen aus den Nullpositionen nach Verstellrichtung und/oder Verstellweg gespeichert wird, und daß die Kompensationsmassen dadurch in die Nullpositionen gebracht werden, daß sie um den jeweils gespeicherten Verstellweg in entgegengesetzter Verstellrichtung zurückbewegt werden. Dabei ist vorteilhaft, daß für die Durchführungen dieses Verfahrens keine zusätzlichen Hardwarevoraussetzungen geschaffen werden müssen.

Ein vorteilhafte Ausgestaltung des erfindungsgemäßen Verfahrens ist dadurch gekennzeichnet, daß im Schritt (a) Verstellrichtung und/oder Verstellweg der Kompensationsmassen über eine Endcodereinrichtung erfaßt wird. Damit können in vorteilhafter Weise die Ist-Positionen, daß heißt die absoluten Positionen nach Verstellweg und -richtung, erfaßt werden, so daß eine Rückführung der Kompensationsmassen in Nullpositionen entsprechend durchgeführt werden kann.

Eine weitere vorteilhafte Ausgestaltung des erfindungsgemäßen Verfahrens ist dadurch gekennzeichnet, daß im Schritt (a) Verstellrichtung und/oder Verstellweg der Kompensationsmassen über einen an der Verstelleinheit angeordneten Schrittgeber erfaßt wird.

Eine weitere vorteilhafte Ausgestaltung des erfindungsgemäßen Verfahrens ist dadurch gekennzeichnet, daß im Schritt (a) der Verstellweg der Kompensationsmassen über die Zeitdauer der Verstellbewegung und die Verstellrichtung über die Drehrichtung der Verstelleinheit erfaßt wird.

Eine weitere vorteilhafte Ausgestaltung des erfindungsgemäßen Verfahrens ist dadurch gekennzeichnet, daß im Schritt (a) der Verstellweg über die Stromaufnahme der Verstellung der Kompensationsmassen und die Verstellrichtung über die Drehrichtung der Verstelleinheit erfaßt wird.

Die drei zuletzt genannten, vorteilhaften Ausführungsformen des erfindungsgemäßen Verfahrens sind deshalb vorteilhaft, weil sie mit einfachen Mitteln umgesetzt werden können, die sich im Betrieb als robust erweisen.

Eine weitere vorteilhafte Ausführungsform des erfindungsgemäßen Verfahrens ist dadurch gekennzeichnet, daß im Schritt (a) die Kompensationsmassen solange verfahren werden, bis durch zwei einander gegenüberliegende Sensoren festgestellt wird, daß die Kompensationsmassen bei den Sensoren liegen. Durch die Sensoren wird somit erfaßt, wenn die Kompensationsmassen um 180° gegeneinander versetzt sind bzw. die Positionen 0° und 180° einnehmen.

Eine weitere vorteilhafte Ausgestaltung des erfindungsgemäßen Verfahrens ist dadurch gekennzeichnet, daß im Schritt (c) der Verstellwinkel über eine Endcodereinrichtung erfaßt wird.

Eine weitere vorteilhafte Ausgestaltung des erfindungsgemäßen Verfahrens ist dadurch gekennzeichnet, daß im Schritt (c) der Verstellwinkel über einen an der Verstelleinheit angeordneten Schrittgeber erfaßt wird.

Eine weitere vorteilhafte Ausgestaltung des erfindungsgemäßen Verfahrens ist dadurch gekennzeichnet, daß im Schritt (c) der Verstellwinkel über die Zeitdauer der Verstellbewegung erfaßt wird.

Schließlich ist eine weitere vorteilhafte Ausgestaltung des erfindungsgemäßen Verfahrens dadurch gekennzeichnet, daß in dem Schritt (c) der Verstellwinkel über die Stromaufnahme bei der Verstellung erfaßt wird.

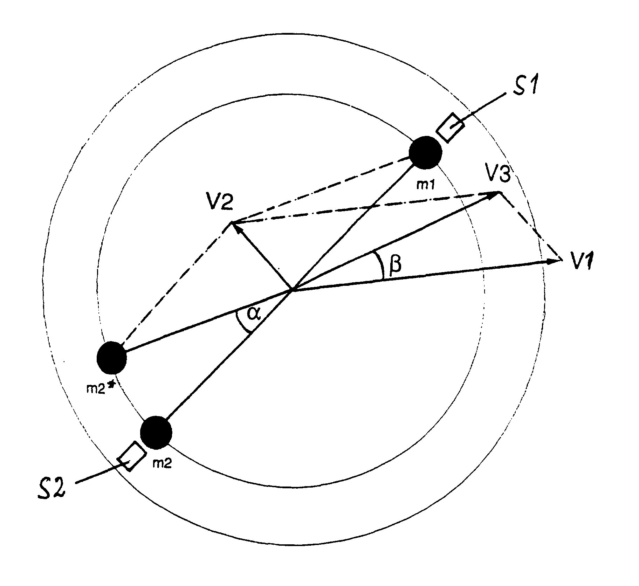

Eine Ausführungsform des erfindungsgemäßen Verfahrens, bei dem die Kompensationsmasse um einen Winkel $\alpha$ verstellt wird, wird nun anhand der beiliegenden Zeichnung beschrieben, die ein bevorzugtes Ausführungsbeispiel einer Einrichtung zur Durchführung des Verfahrens schematisch darstellt.

Zunächst werden die in dem automatischen Wuchtapparat vorhandenen Kompensationsmassen m1, m2 in neutrale Nullpositionen gefahren, wobei die Kompensationsmassen m1, m2 um 180° versetzt einander gegenüber liegen. Die Tatsache, daß die Kompensationsmassen m1, m2 in den Nullpositionen liegen, wird durch Sensoren S1, S2 festgestellt. Die Ausgangssignale der Sensoren S1, S2 werden an eine Haupt-Steuerungseinrichtung abgegeben, worauf diese veranlaßt, daß eine Meßschaltung den Vektor V1 erfaßt, der die tatsächliche Unwucht des Systems aus Wuchtapparat und Rotationskörper darstellt. Nachdem V1 gemessen ist, wird wenigstens eine der Kompensationsmassen um einen Winkel $\alpha$ verstellt, was durch die Kompensationsmasse m2* dargestellt ist. Durch die Verstellung der Kompensationsmasse m2* um den Winkel $\alpha$ wird eine zusätzliche Unwucht mit dem Unwuchtvektor V2 erzeugt. Der Winkel $\beta$ ist der Winkel zwischen dem Unwuchtvektor V1 und dem Unwuchtvektor V3, der sich aus der Verstellung der Kompensationsmasse m2* ergibt. Der Wert des Winkels $\alpha$ wird in dem Wuchtapparat erfaßt und gespeichert.

Der resultierende Vektor V2 bildet zusammen mit der vorhandenen Unwucht eine Gesamt-Unwucht mit dem Gesamt-Unwuchtvektor V3, der nach Größe und Richtung gemessen wird. Eine Rechenschaltung in dem Wuchtapparat errechnet aus dem resultierenden Vektor V3 und dem Unwuchtvektor V1 den resultierenden Unwuchtvektor V2 nach der Formel:

$$V2 = V3 - V1.$$

Damit ist bekannt, welcher Unwuchtvektor V2 durch die Bewegung der Kompensationsmasse m2 um den Winkel $\alpha$ zur Folge hat, und diese Werte können benutzt werden, um die Positionen zu errechnen, in die die Kompensationsmassen gezielt verfahren werden müssen, um die vorhandene Unwucht V1 zu kompensieren.

Bei einer Verstellen des Abstandes der Kompensationsmasse von der Rotationsachse wird das System analog kalibriert, was keiner näheren Erläuterung bedarf.

Durch die Verstellung der Kompensationsmasse m2 um einen bekannten Winkelbetrag oder durch Verstellen des Abstandes der Kompensationsmasse von der Rotationsachse wird das System aus Wuchtapparat und Rotationskörper kalibriert und zwar in relativen Größen. Die Phasenverschiebung und die Dämpfung der Schwingungsamplitude des Systems werden ebenfalls durch diesen Kalibrierungsvorgang erfaßt. Es entfällt damit die "Try and Error" Methode nach dem Stand der Technik, und die Kompensationsmassen können gezielt in die richtigen Positionen gefahren werden.

## Patentansprüche

1.  Verfahren zum Auswuchten eines Rotationskörpers mit einem Wuchtapparat, der eine Verstelleinheit zum Verstellen von Kompensationsmassen aufweist, **dadurch gekennzeichnet, daß**

    (a) die Kompensationsmassen in ihre Nullpositionen gebracht werden, in denen sich die von ihnen erzeugten Unwuchtvektoren gegnseitig aufheben, daß

    (b) in an sich bekannter Weise der dann vorhandene Unwuchtvektor V1 nach Größe und Richtung gemessen wird, daß

    (c) wenigstens eine der Kompensationsmassen um einen beliebigen Winkel $\alpha$ oder ihr Abstand von der Rotationsachse verstellt wird, , wobei eine zusätzliche Unwucht mit einem Kalibrierungs-Unwuchtvektor V2 erzeugt wird, daß

    (d) der Winkel $\alpha$ oder die Verstellung des Abstandes erfaßt wird, daß

    (e) in an sich bekannter Weise der dann vorhandene Gesamt-Unwuchtvektor V3 nach Größe und Richtung gemessen wird, daß

    (f) aus dem Unwuchtvektor V1 und dem Gesamt-Unwuchtvektor V3 der Kalibrierungs-Unwuchtvektor V2 nach:

    $$V2 = V3 - V1$$

    berechnet wird, wobei das System aus Wuchtapparat und Rotationskörper kalibriert ist, und daß

    (g) die Kompensationsmassen aus den Nullpositionen derart verfahren werden, daß der Unwuchtvektor V1 kompensiert wird.

**2.** Verfahren nach Anspruch 1, **dadurch gekennzeichnet, daß** im Schritt (a) bei einem Wuchtvorgang die Verstellung der Kompensationsmassen aus den Nullpositionen nach Verstellrichtung und/oder Verstellweg gespeichert wird, und daß die Kompensationsmassen dadurch in die Nullpositionen gebracht werden, daß sie um den jeweils gespeicherten Verstellweg in entgegengesetzter Verstellrichtung zurückbewegt werden.

**3.** Verfahren nach Anspruch 1, **dadurch gekennzeichnet, daß** im Schritt (a) Verstellrichtung und/oder Verstellweg der Kompensationsmassen über eine Endcodereinrichtung erfaßt wird.

**4.** Verfahren nach Anspruch 1, **dadurch gekennzeichnet, daß** im Schritt (a) Verstellrichtung und/oder Verstellweg der Kompensationsmassen über einen an der Verstelleinheit angeordneten Schrittgeber erfaßt wird.

**5.** Verfahren nach Anspruch 1, **dadurch gekennzeichnet, daß** im Schritt (a) der Verstellweg der Kompensationsmassen über die Zeitdauer der Verstellbewegung und die Verstellrichtung über die Drehrichtung der Verstelleinheit erfaßt wird.

**6.** Verfahren nach Anspruch 1, **dadurch gekennzeichnet, daß** im Schritt (a) der Verstellweg über die Stromaufnahme der Verstellung der Kompensationsmassen und die Verstellrichtung über die Drehrichtung der Verstelleinheit erfaßt wird.

**7.** Verfahren nach Anspruch 1, **dadurch gekennzeichnet, daß** im Schritt (a) die Kompensationsmassen solange verfahren werden, bis durch zwei einander gegenüberliegende Sensoren festgestellt wird, daß die Kompensationsmassen bei den Sensoren liegen.

**8.** Verfahrens nach Anspruch 1, **dadurch gekennzeichnet, daß** im Schritt (c) der Verstellwinkel über eine Endcodereinrichtung erfaßt wird.

**9.** Verfahren nach Anspruch 1, **dadurch gekennzeichnet, daß** im Schritt (c) der Verstellwinkel über einen an der Verstelleinheit angeordneten Schrittgeber erfaßt wird.

**10.** Verfahren nach Anspruch 1, **dadurch gekennzeichnet, daß** im Schritt (c) der Verstellwinkel über die Zeitdauer der Verstellbewegung erfaßt wird.

**11.** Verfahren nach Anspruch 1, **dadurch gekennzeichnet, daß** in dem Schritt (c) der Verstellwinkel über die Stromaufnahme bei der Verstellung erfaßt wird.

## Claims

**1.** A method for balancing a body of revolution comprising a balancing machine, which possesses an adjustment unit for position resetting of compensation masses, wherein

> (a) the compensation masses are placed in a zero position thereof, wherein the inbalance vectors produced thereby cancel each other out,
> (b) in a known manner the inbalance vector VI present is measured in terms of its magnitude and direction,
> (c) at least one of the compensation masses is reset by shifting through any desired angle a or by changing its distance from the axis of rotation, an additional inbalance being produced with a calibration inbalance vector V2,
> (d) the angle a or the change in the distance is measured,
> (e) in a known manner the overall inbalance vector V3 present is measured in terms of its magnitude and direction,
> (f) from the inbalance vector V1 and the overall inbalance vector V3 the calibration inbalance vector V2 is calculated from

$$V2=V3-V1,$$

> the system comprising the balancing machine and the body of revolution being calibrated, and
> (g) the compensation masses are so moved out of the zero positions that the inbalance vector V1 is compensated for.

**2.** The method as claimed in claim 1, wherein in step (a) in a balancing operation the shift of the compensation masses out of the zero positions is registered in terms of the direction and/or amount of shift and in that the compensation masses are brought into the zero positions and they are moved back through the respectively traveled shift distance in the opposite direction of shift.

**3.** The method as claimed in claim 1, **characterized in** step (a) the direction and/or amount of shift of the compensation masses is registered using an encoding means.

**4.** The method as claimed in claim 1, wherein in step (a) the direction and/or amount of displacement of the compensation masses is registered using a clock generator means arranged on the adjustment unit.

5. The method as claimed in claim 1, wherein in step (a) the amount of displacement of the compensation masses is registered on the basis of the duration of the adjustment movement and the direction of adjustment is registered on the basis of the direction of turning of the adjustment unit.

6. The method as claimed in claim 1, wherein in step (a) the adjustment displacement is registered on the basis of the current consumption involved in adjustment of the compensation masses and the direction of adjustment is registered on the basis of the direction of turning of the adjustment unit.

7. The method as claimed in claim 1, wherein in step (a) the compensation masses are displaced until the two mutually opposite sensors detect that the compensation masses are at the sensors.

8. The method as claimed in claim 1, wherein in step (c) the angle of adjustment is registered using an encoding means.

9. The method as claimed in claim 1, wherein in step (c) the angle of adjustment is registered using a stepping means arranged on the adjustment means.

10. The method as claimed in claim 1, wherein in step (c) the angle of adjustment is registered on the basis of the duration of the adjustment movement.

11. The method as claimed in claim 1, wherein in step (c) the adjustment angle is registered on the basis of the current consumption during adjustment.

## Revendications

1. Procédé pour équilibrer un corps de révolution avec un appareil d'équilibrage qui présente une unité de réglage pour régler les masses de compensation , **caractérisé en ce que** :

(a) les masses de compensation sont amenés aux positions zéro où les vecteurs de déséquilibrage générés par lesdites masses s'annulent mutuellement, en ce
(b) que l'on mesure, d'une manière connue, la taille et la direction du vecteur de déséquilibrage V1 alors existant, en ce
(c) qu'au moins une des masses de compensation est réglée selon un angle quelconque α ou sa distance par rapport à l'axe de rotation ; un déséquilibrage supplémentaire se produisant avec un vecteur de déséquilibrage V2, en ce
(d) que l'angle α ou le réglage de la distance est détecté, en ce
(e) que l'on mesure alors la taille et la direction du vecteur global de déséquilibrage existant V3 d'une manière connue , en ce
(f) que l'on calcule à partir du vecteur de déséquilibrage V1 et du vecteur global de déséquilibrage V3 le vecteur de calibrage - déséquilibrage V2 selon :

$$V2 = V3 - V1;$$

le système constitué de l'appareil d'équilibrage et du corps de révolution étant calibré, et en ce
(g) que les masses de compensation sont déplacées à partir des positions zéro de manière à compenser le vecteur de déséquilibrage V1.

2. Procédé selon la revendication 1, **caractérisé en ce que** dans l'étape (a), le réglage des masses de compensation à partir de la position zéro est stocké , lors d'une procédure d'équilibrage , selon la direction de réglage et / ou le chemin de réglage et **en ce que** les masses de compensation sont amenées ainsi à la position zéro de manière à être déplacées en arrière, du montant du chemin de réglage enregistré, dans la direction de réglage inverse.

3. Procédé selon la revendication 1, **caractérisé en ce que** dans l'étape (a), la direction de réglage et / ou le chemin de réglage des masses de compensation sont détectés par un dispositif de codage final.

4. Procédé selon la revendication 1, **caractérisé en ce que** dans l'étape (a), la direction de réglage et / ou le chemin de réglage des masses de compensation sont détectés par un capteur disposé sur l'unité de réglage.

5. Procédé selon la revendication 1, **caractérisé en ce que** dans l'étape (a), le chemin de réglage des masses de compensation est détecté au moyen de la durée du mouvement de réglage et la direction de réglage est détectée au moyen de la direction de rotation de l'unité de réglage.

6. Procédé selon la revendication 1, **caractérisé en ce que** dans l'étape (a), le chemin de réglage est détecté au moyen de la consommation de courant du réglage des masses de compensation et la direction de réglage est détectée au moyen de la direction de rotation de l'unité de réglage.

**7.** Procédé selon la revendication 1, **caractérisé en ce que** dans l'étape (a), les masses de compensation sont déplacées jusqu'à ce que deux capteurs se faisant face détectent que les masses de compensation se trouvent au niveau des capteurs.

**8.** Procédé selon la revendication 1, **caractérisé en ce que** dans l'étape (c), l'angle de réglage est détecté par un dispositif de codage final.

**9.** Procédé selon la revendication 1, **caractérisé en ce que** dans l'étape (c), l'angle de réglage est détecté par un capteur disposé sur l'unité de réglage.

**10.** Procédé selon la revendication 1, **caractérisé en ce que** dans l'étape (c), l'angle de réglage est détecté au moyen de la durée du mouvement de réglage.

**11.** Procédé selon la revendication 1, **caractérisé en ce que** dans l'étape (c), l'angle de réglage est détecté au moyen de la consommation de courant lors du réglage.